# EUROPÄISCHE PATENTANMELDUNG

(11) **EP 2 426 432 A2**
(43) Veröffentlichungstag der Anmeldung: **07.03.2012**
(21) Anmeldenummer: 11179320.4
(22) Anmeldetag: 30.08.2011
(51) Int. Cl.: F24J 2/52

(54) **Profilschiene, Halteelement und damit gebildete Solarmodulanordnung, insbesondere für eine Quermontage von Solarmodulen**

(30) Priorität: 01.09.2010 DE 102010040124
(71) Anmelder: Mounting Systems GmbH, 15834 Rangsdorf (DE)
(72) Erfinder: Schnitzer, Sandy, 17258 Feldberger Seenlandschaft (DE)
(74) Vertreter: Eisenführ, Speiser & Partner

(57) **Zusammenfassung**

Die Erfindung umfasst eine Profilschiene, insbesondere zur Halterung gerahmter Solarmodule, mit einem Schienenkörper und zwei Auflageschenkeln, von denen mindestens einer in einer senkrecht zu einer Längsrichtung der Profilschiene stehenden Querrichtung vom Schienenkörper absteht und die zueinander parallele Auflageflächen auf unterschiedlicher Höhe bezüglich einer Unterkante der Profilschiene mit einem Höhenabstand voneinander in einer senkrecht zur Quer- und Längsrichtung weisenden Höhenrichtung aufweisen, und mit einer in die Querrichtung weisenden Anlagefläche zwischen den Auflageschenkeln, die den Höhenabstand zwischen den Auflageschenkeln zumindest teilweise überbrückt.

## Beschreibung

Die Erfindung betrifft eine Profilschiene, insbesondere zur Halterung gerahmter Solarmodule, ein Halteelement für einen Rahmen zur Verwendung in Verbindung mit einer erfindungsgemäßen Profilschiene sowie eine Solarmodulanordnung.

Aus dem Dokument EP 2 006 613 A2 ist eine Solarmodulanordnung mit Profilschienen und Halteelementen zur Halterung von gerahmten Solarmodulen auf einem Dach bekannt. Ein Gestellaufbau ist auf die geneigte Dachfläche des Schrägdachs montiert. Zwei horizontale, also parallel zum Dachfirst verlaufende Profilschienen sind auf zwei weiteren, senkrecht dazu verlaufenden Schienen des Gestellaufbaus befestigt. Die rechteckigen Solarmodule liegen mit den kürzeren Rahmen-Querseiten ihrer Rahmen auf den zwei horizontalen Profilschienen auf. An den einstückigen horizontalen Profilschienen ist ein galgenförmiges Haltestück ausgebildet, das mit einer Seite seines vertikalen Teils eine Anlagefläche zum Abstützen eines Solarmoduls bildet. T-förmige Haltebleche sind zwischen den beiden Solarmodulen in die horizontal verlaufenden Profilschienen eingeführt, um wie der horizontale Teil des galgenförmigen Haltestücks der Profilschienen zwei benachbarte Solarmodule in einer Richtung senkrecht zur Dachfläche festzuhalten. Die Halteelemente umgreifen die benachbarten Solarmodulrahmen jeweils auf den längeren Rahmen-Längsseiten.

Das der Erfindung zugrunde liegende technische Problem ist es, eine demgegenüber einfacher zu fertigende und leichter zu montierende Konstruktion zur Halterung von gerahmten Solarmodulen für eine Solarmodulanlage anzugeben. Gewünscht ist, dass diese Konstruktion sich auch dafür eignet, rechteckige Solarmodule quer zu montieren.

Nachfolgend werden zunächst die unterschiedlichen Aspekte der Erfindung sowie die bevorzugte Ausführungsform einer Solarmodulanordnung beschrieben. Anschließend werden die Vorteile und Ausführungsformen der verschiedenen Aspekte der Erfindung erläutert.

Gemäß einem ersten Aspekt der Erfindung wird das technische Problem gelöst durch eine Profilschiene, insbesondere zur Halterung gerahmter Solarmodule, mit
- einem Schienenkörper
- zwei Auflageschenkeln, von denen mindestens einer in einer senkrecht zu einer Längsrichtung der Profilschiene stehenden Querrichtung vom Schienenkörper absteht und die zueinander parallele Auflageflächen auf unterschiedlicher Höhe bezüglich einer Unterkante der Profilschiene mit einem Höhenabstand voneinander in einer senkrecht zur Quer- und Längsrichtung weisenden Höhenrichtung aufweisen, und mit
- einer in die Querrichtung weisenden Anlagefläche zwischen den Auflageschenkeln, die den Höhenabstand zwischen den Auflageschenkeln überbrückt.

Einen zweiten Aspekt der Erfindung bildet ein Halteelement für einen Rahmen zur Verwendung in Verbindung mit einer Profilschiene nach dem ersten Aspekt der Erfindung oder einem ihrer Ausführungsbeispiele, mit
- einer in einer Querschnittsansicht T-förmigen Rahmenaufnahme, wobei ein vertikaler Balken der T- -Form eine Anlagefläche für einen im Einbauzustand zu halternden Rahmen bildet,
- einer mit der Rahmenaufnahme verbundenen, in derselben Querschnittsansicht C-förmigen Schenkelaufnahme, die ausgebildet ist, im Einbauzustand einen von der Profilschiene in einer senkrecht zu einer Längsrichtung der Profilschiene stehenden Querrichtung vom Schienenkörper abstehenden Auflageschenkel der Profilschiene zu umgreifen, wobei eine Außenfläche des oberen C-Balkens der Schenkelaufnahme zugleich eine Rahmenauflagefläche der Rahmenaufnahme bildet.

Einen dritten Aspekt der Erfindung und ihre bevorzugte Ausführungsform bildet schließlich eine Solarmodulanordnung, mit
- einer Vielzahl parallel zueinander verlaufender und quer zu ihrer Längsrichtung voneinander beabstandeter Profilschienen nach dem ersten Aspekt der Erfindung oder einem ihrer Ausführungsbeispiele,
- einer Vielzahl gerahmter Solarmodule, die jeweils auf zwei benachbarten der Profilschienen gelagert sind, wobei
- die Solarmodule jeweils mit einem ersten Rahmenteil ihres Rahmens in der Rahmenaufnahme mindestens eines der Halteelemente nach dem zweiten Aspekt der Erfindung oder einem ihrer Ausführungsbeispiele auf einem ersten Auflageschenkel einer ersten der zwei benachbarten Profilschienen in gehaltert sind und mit einem anderen Rahmenteil unmittelbar auf einem der ersten Profilschiene zugewandten zweiten Auflageschenkel einer zweiten der zwei benachbarten Profilschienen aufliegen.

Die erfindungsgemäße Lösung hat gegenüber dem bekannten Stand der Technik Vorteile sowohl im Hinblick auf die Montage als auch auf die Fertigung. In Kombination miteinander ermöglichen die Profilschiene des ersten Aspekts der Erfindung und das Halteelement des zweiten Aspekts der Erfindung, Solarmodule auf besonders einfache Weise mit einem Minimum zusätzlicher Befestigungsmittel wie Schrauben etc. zu montieren. Dies wird erreicht, indem einerseits die Lagerung der Solarmodule auf einer ersten Profilschiene in der Rahmenaufnahme der Halteelemente und andererseits die unmittelbare Auflage der Solarmodule auf einem Auflageschenkel einer benachbarten Profilschiene ermöglicht wird. Ein Abrutschen der Solarmodulrahmen gegen die Querrichtung aufgrund der Schwerkraft wird mit Hilfe der Anlagefläche zwischen den Auflageschenkeln verhindert, welche den Höhenabstand zwischen den Auflageschenkeln entweder teilweise oder vollständig überbrückt. Zugleich wird mit der Lagerung der Solarmodulrahmen in der C-förmigen Rahmenaufnahme des Halteelements in Verbindung mit der C-förmigen Schenkelaufnahme verhindert, dass der Rahmen in der Höhenrichtung von der Profilschiene "abhebt" (Sogsicherung). Schließlich wird ein Verrutschen in Längsrichtung der Profilschiene aufgrund der Reibungskraft zwischen dem Halteelement und der Auflagefläche der Profilschiene verhindert. Durch die erfindungsgemäße Konstruktion von Profilschiene und Halteelement gelingt es also, allein durch Rückgriff auf Formschluss und Haftreibung eine ortsfeste Halterung für Solarmodule zu ermöglichen.

Eine separate Befestigung der Halteelemente auf den Profilschienen ist grundsätzlich nicht nötig. Lediglich auf der obersten Profilschiene ist eine zusätzliche Befestigung des Halteelements gegen ein Verrutschen in Querrichtung sinnvoll, was in bevorzugten einfachen Ausführungsbeispielen beispielsweise mit Hilfe von Schrauben gelingt, die die Halteelemente an dem Schienenkörper der Profilschiene befestigen.

Fertigungstechnisch liegt der Vorteil der erfindungsgemäßen Lösung darin, dass die Halteelemente aus einem entsprechend gefertigten einfachen Profil lediglich ausgesägt werden müssen und keine weitere Bearbeitung oder Vormontage erfordern - sieht man von der Vorbereitung zusätzlicher, bereits erwähnter Befestigungsmöglichkeiten an der obersten Profilschiene ab.

Nachfolgend werden Ausführungsbeispiele der verschiedenen Aspekte der Erfindung beschrieben. Die zusätzlichen Merkmale der Ausführungsbeispiele können miteinander kombiniert werden, soweit sie nicht als Alternativen zueinander beschrieben sind.

Eine besonders bevorzugte Ausführungsform des Halteelements sieht vor, dass ein oberer horizontaler Balken der C-förmigen Schenkelaufnahme eine Auflagefläche für den im Einbauzustand zu halternden Rahmen bildet und dass dieser obere horizontale C-Balken eine Materialstärke in Höhenrichtung hat, die gleich dem Höhenabstand der Auflageflächen der Profilschiene ist. Damit wird erreicht, dass im Einbauzustand alle Solarmodule in einer gemeinsamen Ebene liegen können. Bevorzugt sind dafür bei der Solarmodul-Anordnung die Profilschienen so montiert, dass ihre Auflageflächen gleicher Höhe bezüglich der jeweiligen Profilschiene jeweils in einer gemeinsamen Ebene liegen. Durch Verwendung der Halteelemente des vorliegenden Ausführungsbeispiels, die in der Solarmodulanordnung in die Profilschienen jeweils auf den Auflageschenkeln geringerer Höhe eingehängt sind, wird erreicht, dass diese gemeinsame Ebene für die Lagerung der Rahmen die Auflageflächen der oberen Auflageschenkel und die Rahmenlagerflächen der Halteelemente umfasst. Diese gemeinsame Ebene entspricht also der von den Auflageflächen größerer Höhe auf den Profilschienen gebildeten gemeinsamen Ebene.

Eine besonders einfach zu fertigende Konstruktion der Profilschiene hat stufenartig aneinandergrenzende Auflageflächen, die durch die in Querrichtung weisende Anlagefläche verbunden sind. Vorzugsweise erstrecken sich die Auflageflächen und die Anlagefläche der Profilschiene in ihrer Längsrichtung über die gesamte Länge der Profilschiene.

Die Auflageschenkel der Profilschiene stehen in bevorzugten Ausführungsformen beide vom Schienenkörper ab, weil dies eine gleichzeitig stabile und materialsparende Konstruktionsform bildet. Es ist aber auch möglich, nur einen der beiden Auflageschenkel vom Schienenkörper abstehen zu lassen und den anderen der beiden Auflageschenkel vollständig auf einer Oberseite des Schienenkörpers auszubilden. In diesem Fall steht vorzugsweise derjenige der beiden Auflageschenkel ab, welcher die geringere Höhe über der Unterkante der Profilschiene hat. An diesem wird das Halteelement angeordnet.

Derjenige der beiden Auflageschenkel, dessen Auflagefläche in der Höhenrichtung auf der geringeren Höhe angeordnet ist, hat in einer Ausführungsform an seiner Unterseite ein Verbindungselement zum formschlüssigen Verbinden der Profilschiene mit einem Haltelement. Die formschlüssige Verbindung dient zur Sicherung der Lage des auf dem unteren der beiden Auflageschenkel gelagerten Rahmens. Sie ist so gestaltet, dass ein Abziehen des Haltelements von der Profilschiene in derjenigen Richtung erschwert oder verhindert wird, in welcher dieser Auflageschenkel vom Schienenkörper absteht. Das Verbindungselement kann beispielsweise die Form einer nach unten hin ragenden Nase haben, mit der ein entsprechend geformtes Gegen-Verbindungselement des Halteelements ein Eingriff kommen kann. Auf diese Weise wird ein "Klickmechanismus" zur sicheren Montage des Moduls erreicht, das bei der Montage nicht "wegfliegen" kann. Denkbar ist auch eine alternative Form des Verbindungselement in Form einer Ausnehmung an entweder der Profilschiene oder am Halteelement, in die eine vorstehendes Verbindungselement wie eine Nase oder ein Zahn am jeweils anderen Teil zur Herstellung der formschlüssigen Verbindung eingreift.

Die Grundfunktion und Grundkonstruktion des Halteelements kann für unterschiedliche Installationsorte innerhalb einer Solarmodulanordnung auf jeweils besondere Weise weitergebildet werden.

Für das Abstützen der Solarmodule insbesondere auf einer untersten Profilschiene der Solarmodulanordnung eignen sich insbesondere C-förmige Rahmenaufnahmen. Dieses Halteelement ermöglicht auf einfache, den Formschluss nutzende Konstruktionsmerkmale ein wirksames Abstützen der Solarmodule gegen ein Abrutschen gegen die Querrichtung der Profilschiene. Es sei angemerkt: je nach Sichtrichtung kann in der Querschnittsansicht eine C-Form wie der Buchstabe C oder gespiegelt erscheinen. Die "eigentliche" C-Form und die am vertikalen Balken des C gespiegelte C-Form werden hier insofern als gleichwertige Ausführungsformen der C-Form verstanden. Wesentlich ist die Bildung einer Rahmenaufnahme durch die C-Form, also eine zum Rahmen hin weisende Öffnung der Form.

Entsprechendes gilt für die C-Form der Schenkelaufnahme. Hier kommt es ebenfalls weniger auf die Sichtrichtung auf das Halteelement an als vielmehr auf die Öffnung der Schenkelaufnahme zum Auflageschenkel hin, um diesen auf drei Seiten umgreifen zu können. Bei dem Halteelement mit C-förmiger Rahmenaufnahme weisen die Anlageflächen der Rahmenaufnahme und der Schenkelaufnahme (und somit ihre Öffnungen) in entgegengesetzte Richtungen.

Die Schenkelaufnahme hat in einer Ausführungsform auf ihrer nach innen, d.h. im Montagezustand zum Auflageschenkel der Profilschiene weisenden Seite des unteren horizontalen C-Balkens ein Gegen-Verbindungselement zum formschlüssigen Verbinden der Profilschiene mit dem Haltelement. Zweck und mögliche Ausgestaltung des Gegen-Verbindungselements wurden bereits oben im Zusammenhang mit dem entsprechenden Ausführungsbeispiel der Profilschiene erläutert. Das Gegen-Verbindungselement kann demnach beispielsweise die Form einer nach oben hin ragenden Nase haben, mit der ein entsprechend geformtes, nach unten weisendes Verbindungselement der Profilschiene in Eingriff kommen kann. Denkbar ist auch eine Ausnehmung als alternative Form des Gegen-Verbindungselements.

Die C-Form der Rahmenaufnahme des Halteelements ist mit ihrem Innenmaß vorzugsweise - abgesehen vom notwendigen Spiel - genau an das Maß des aufzunehmenden Rahmens angepasst. Der obere horizontale C-Balken der Rahmenaufnahme verhindert so, dass das gehalterte Solarmodul etwa bei Wind auch nur geringfügig "abhebt". Diese Funktion wird durch die ebenfalls C-förmige Schenkelaufnahme unterstützt, welche ein Abheben des Solarmoduls zusammen mit dem Halteelement von der Profilschiene verhindert.

Für die oberste Profilschiene eignet sich auch ein vereinfachtes Halteelement mit einer Rahmenaufnahme, deren Form als Form des großen griechischen Buchstaben Gamma oder eines Galgens beschrieben werden. Das Halteelement der vorliegenden Ausführungsform zur Verwendung in der obersten Profilschiene muss keine Stützfunktion gegen Abrutschen nach unten übernehmen, sondern allein das Verschieben der Solarmodulrahmen in Querrichtung der Profilschiene nach oben, in Längsrichtung der Profilschiene und ein Abheben in der Höhenrichtung verhindern. Dies wird mit einer Formgebung, bei der die Anlageflächen der Rahmenaufnahme und der Schenkelaufnahme in die gleiche Richtung weisen, auf besonders einfache Weise gelöst.

Das Halteelement zur Verwendung in der obersten Profilschiene weist bevorzugt am unteren horizontalen C-Balken der Schenkelaufnahme einen senkrecht daran anschließenden Befestigungsschenkel auf. Dieser kann zur Befestigung des Halteelements gegen Bewegungen in Querrichtung der Profilschiene Verwendet werden und weist dazu, wie erwähnt, beispielsweise ein Bohrloch zur Aufnahme eines Verbindungsmittels, beispielsweise einer Schraube auf. Mit dem Verbindungsmittel kann das Halteelement am Schienenkörper der Profilschiene befestigt werden, die dafür ein passend angeordnetes Gewinde aufweist. Es können der Einfachheit halber selbstverständlich auch Bohrschrauben verwendet werden, so dass die Notwendigkeit eines Gewindes in der Wand der Profilschiene entfällt.

Für die Installation von Solarmodulen auf allen anderen Profilschienen, also abgesehen von der untersten und der obersten Profilschiene, sind Halteelemente mit der T-förmigen Rahmenaufnahme besonders geeignet, wobei der vertikale T-Balken auf seinen beiden Seiten eine Anlagefläche für jeweils einen Rahmen bildet. Mit einem solchen Halteelement werden die schon beschriebenen Haltefunktionen der Halteelemente auf der untersten und der obersten Profilschiene auf geschickte Weise kombiniert, ohne dass eine gesonderte Befestigung auf der Profilschiene erforderlich ist.

Die erfindungsgemäße Lösung der Kombination von Profilschiene und Halteelementen eignet sich sowohl für eine Längsmontage als auch für eine Quermontage von Solarmodulen.

Weitere Ausführungsbeispiele sind in den beiliegenden abhängigen Ansprüchen beschrieben.

Nachfolgend wird ein weiteres Ausführungsbeispiel der Erfindung anhand der beiliegenden Zeichnungen erläutert.
Figur 1 zeigt eine Solarmodul-Anordnung in einer perspektivischen Querschnittansicht.
Figur 2 zeigt eine Detailansicht einer Variante der Solarmodul-Anordnung aus Figur 1.

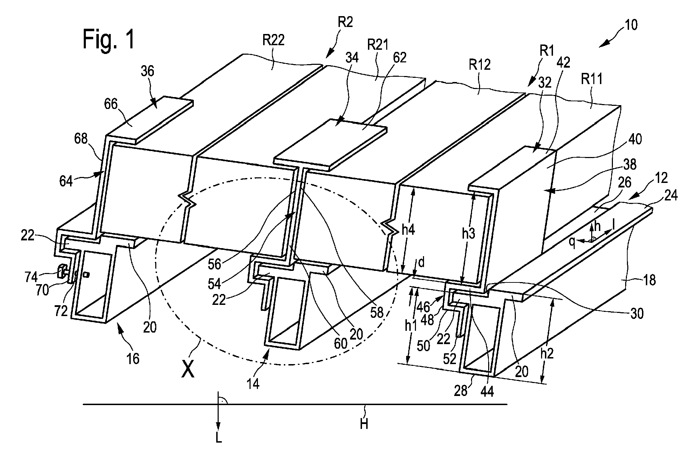

Die Solarmodul-Anordnung 10 der Figur 1 ist nur schematisch dargestellt. Insbesondere sind Solarmodule durch Rahmenstücke R11 und R12 eines ersten Rahmens R1 und Rahmenstücke R21 und R22 eines zweiten Rahmens R2 nur schematisch angedeutet.

Die Solarmodul-Anordnung 10 enthält eine Anzahl Profilschienen, von denen in Figur 1 Profilschienen 12, 14 und 16 dargestellt sind. Einzelheiten zur Montage der Profilschienen auf einem Gestell sind hier nicht dargestellt und entsprechen dem fachüblichen Vorgehen. Ein Koordinatenkreuz dient zur Veranschaulichung einer Längsrichtung 1, einer Querrichtung q und einer Höhenrichtung h, jeweils bezüglich der Profilschiene 12. Die Höhenrichtung h kann also je nach Orientierung der Profilschiene gegen eine zum Erdmittelpunkt weisende Lotrichtung L geneigt sein.

In üblicher Weise ist die Solarmodulanordnung geneigt installiert. Dies kann mit anderen Worten so beschrieben werden, dass die gemeinsame Ebene der Solarmodule gegenüber einer Horizontebene H am Installationsort der Solarmodulanordnung 10 geneigt ist, also in einem spitzen Winkel zu dieser Ebene steht. Die Horizontebene (H) wird unabhängig von den Gegebenheiten des Installationsorts als senkrecht zur Lotrichtung L am Installationsort angenommen. Die Anordnung der Fig. 1 ist so eingerichtet, dass die Profilschiene 12 die unterste, also einer gedachten Horizontalebene H am nächsten liegende Profilschiene der Solarmodul-Anordnung ist und die Profilschiene 16 die oberste, also von der Horizontalebene H am weitesten entfernt liegende Profilschiene ist. Sowohl eine Dachinstallation als auch eine Installation in einer Freiland-Solaranlage sind mit der vorliegenden Solarmodulanordnung bei Verwendung jeweils geeigneter zusätzlicher Installationsmittel möglich.

Die Profilschienen 12, 14 und 16 sind im Wesentlichen identisch. Sie weisen einen Schienenkörper 18 auf, der vorliegend aus einem rechteckigen Hohlprofil gebildet ist. Vom Schienenkörper 18 stehen zwei Auflageschenkel 20 und 22 ab. Die Auflageschenkel 20 und 22 bilden auf ihren Oberseiten Auflageflächen 24 und 26 auf unterschiedlichen Höhen h1 und h2 gegenüber einer Unterkante 28 der Profilschiene 12. Der Höhenabstand oder Höhenunterschied zwischen den beiden Auflageflächen 24 und 26 ist in Figur 1 mit d gekennzeichnet, wobei d = h2 - h1 erfüllt ist.

Der Höhenabstand d wird durch eine Anlagefläche 30 überbrückt, die in die Querrichtung q weist. Auf diese Weise grenzen die beiden Auflageschenkel 20 und 22 mit ihren Auflageflächen 24 und 26 stufenförmig aneinander.

An der Stufe, also der Anlagefläche 30 liegen jeweils Halteelemente an, von denen in Figur 1 die Halteelemente 32, 34 und 36 dargestellt sind. Es versteht sich, dass über die Länge der Profilschienen 12, 14 und 16 mehrere, mindestens 2 Halteelemente pro Solarmodul vorgesehen sind.

Die Grundkonstruktion der Halteelemente wird nachfolgend anhand des Halteelements 32 erläutert, das zum Einbau auf der untersten Profilschiene 12 vorgesehen ist. Das Halteelement 32 hat eine Rahmenaufnahme 38. Die Rahmenaufnahme 38 ist in der Querschnittansicht der Figur 1 C-förmig. Genauer gesagt hat die Rahmenaufnahme in der gewählten Ansicht die Form eines an seiner vertikalen Wand 40 gespiegelten "C". Ein Höhenabstand h3 zwischen dem oberen und unteren horizontalen C-Balken 42, 44 ist passend zu einem Höhenmaß h4 eines Rahmens R1 eines Solarmoduls gewählt. Der Höhenabstand h3 ist vorzugsweise mit Spiel ausgeführt, also etwas größer als das Höhenmaß h4 des Rahmens, um das Einfügen und geringfügige Verschieben des Rahmens in Längsrichtung der Profilschiene 12 zu erleichtern. Die Rückwand 40 der C-förmigen Rahmenaufnahme 38 liegt mit ihrem unteren Abschnitt an der Anlagefläche 30 der Profilschiene 12 an.

Mit einer C-förmigen Schenkelaufnahme 46, die horizontale C-Balken 44 und 50 sowie einen vertikalen C-Balken 48 aufweist, umgreift das Halteelement 32 den Auflageschenkel 22. Der obere horizontale Balken der C-förmigen Schenkelaufnahme ist mit dem unteren horizontalen C-Balken 44 der Rahmenaufnahme identisch.

Im Einbauzustand drückt also der Rahmen R das Halteelement 32 einerseits gegen die Anlagefläche 30 und andererseits auf die untere Auflagefläche 26. So wird zum Einen durch Formschluss ein Verrutschen des Rahmens nach unten, also aufgrund der Schwerkraft gegen die Querrichtung q verhindert. Zum Anderen wird durch Kraftschluss aufgrund der Reibung zwischen dem Halteelement 32 und der Auflagefläche 26 ein Verrutschen des Rahmens in der Längsrichtung der Profilschiene verhindert. Ein Abheben des Rahmens in der Höhenrichtung h wird durch die C-Form der Rahmenaufnahme 38 und durch die C-Form der Schenkelaufnahme 46 verhindert. Eine separate Befestigung des Halteelements 32 am Schienenkörper 18 ist daher nicht nötig. Es genügt allein, dass Halteelement 32 in die Profilschiene am unteren Aufnahmeschenkel 22 einzuhängen und anschließend den Rahmen R einzuführen.

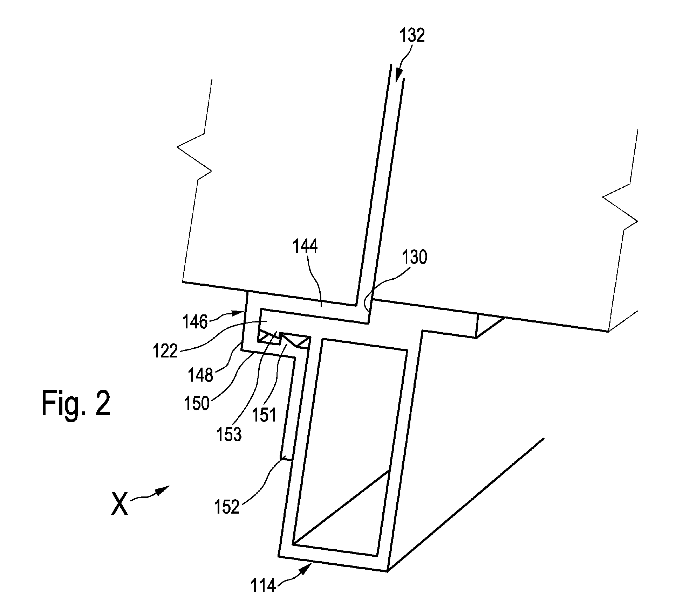

Als Exkurs wird an dieser Stelle auf die in Fig. 2 dargestellte Variante mit einer zusätzlichen Sicherung der Verbindung zwischen dem Halteelement und der Profilschiene verwiesen. Der in Fig. 2 dargestellte Ausschnitt entspricht in etwa dem in Fig. 1 durch eine Strichpunkt-Linie gekennzeichneten Bereich X. Die in Fig. 2 verwendeten Bezugszeichen für auch in Fig. 1 dargestellte Teile gleichen denen der Fig. 1, enthalten jedoch zusätzlich eine vorangestellte 1. Beispielsweise ist die Profilschiene in Fig. 1 mit dem Bezugszeichen 14 und in Fig. 2 mit dem Bezugszeichen 114 gekennzeichnet.

Die Variante der Fig. 2 sieht eine zusätzliche formschlüssige Verbindung zwischen der Profilschiene 114 und dem Halteelement 132 vor. Hierzu hat der Auflageschenkel 122, dessen Auflagefläche in der Höhenrichtung auf der geringeren Höhe angeordnet ist, an seiner Unterseite ein Verbindungselement 153 in Form einer Nase. Als Gegen-Verbindungselement weist das Halteelement an seiner Schenkelaufnahme 146 auf ihrer nach innen, d.h. im Montagezustand zum Auflageschenkel 122 der Profilschiene 114 weisenden Seite des unteren horizontalen C-Balkens 150 ebenfalls eine, jedoch nach oben weisende Nase 151 auf. Bei der Montage kann die formschlüssige Verbindung durch einfaches "Einklicken" des Halteelements 132 hergestellt werden und bei Bedarf durch elastisches Biegen wieder gelöst werden. Mit Hilfe dieser Verbindung ist das Halteelement 132 schon bei der Montage gegen Verrutschen in einer senkrecht zur Längsrichtung der Profilschiene 114 und zu den Auflageflächen der Auflageschenkel stehenden Richtung gesichert und kann das Modul sicher montiert werden.

Nachfolgend wird wieder auf Fig. 1 Bezug genommen. Es sei erwähnt, dass der untere Horizontalbalken der C-förmigen Rahmenaufnahme 38 in einem besonders bevorzugten Ausführungsbeispiel eine Materialstärke in Höhenrichtung h hat, die genau gleich dem Höhenabstand d der Auflageflächen 24 und 26 ist. Auf diese Weise wird ermöglicht, dass das eingefügte Solarmodul mit dem Rahmen R1 in genau derselben Ebenen liegt wie der benachbarte Rahmen R2. Insgesamt werden auf diese Weise alle Solarmodule in ein und derselben gemeinsamen Ebene gelagert.

Die Halteelemente 34 und 36 unterscheiden sich vom Halteelement 32 in einigen Details, die nachfolgend beschrieben werden. Das Halteelement 34 hat eine T-förmige Rahmenaufnahme 54 mit zwei Anlageflächen 56 und 58. Die Anlagefläche 56 dient zum Abstützen eines zweiten Solarmoduls R2. Weiterhin dient der horizontale T-Balken 62 der Rahmenaufnahme 54 des Halteelements 34 zur beiderseitigen Halterung der Rahmen R1 und R2 gegen Bewegungen in Höhenrichtung h, insbesondere als Sogsicherung.

Das Halteelement 36 an der obersten Profilschiene 16 hat eine S-förmige Rahmenaufnahme 64. Hier liegt jedoch der Rahmen mit seiner Unterseite unmittelbar auf dem höheren Auflageschenkel 20 auf. Das Halteelement 36 hat in seiner Rahmenaufnahme einen oberen horizontalen Balken 66 und einen vertikalen Balken 68. Diese verhindern Bewegungen des eingebauten Solarmodul-Rahmens R2 in Höhenrichtung und in Querrichtung. Zur Feststellung des Halteelements in Querrichtung ist an einem Befestigungsschenkel 70 ein Bohrloch 72 vorgesehen, durch das mit Hilfe einer Schraube 74 ein Abgleiten des Halteelements 36 in Querrichtung verhindert wird.

Die Montage einer Solarmodul-Anordnung erfolgt sinnvollerweise von unten nach oben, beginnt also mit dem Installieren der Halteelemente 32 auf der untersten Profilschiene und der Halteelemente 34 auf der nächst benachbarten Profilschiene 14. Nach Bestückung der beiden Profilschienen 12 und 14 mit einer ersten Solarmodul-Reihe wird die nächst höhere Solarmodul-Reihe montiert, bis hin zur obersten Solarmodul-Reihe zwischen den Profilschienen 14 und 16. Abschließend werden die Haltelemente an der obersten Profilschiene 16 mit den Schrauben 74 festgeschraubt.

Es sei angemerkt, dass das technische Problem und die erfindungsgemäße Lösung unabhängig davon sind, ob Solarmodule oder andere gerahmte Bauteile, wie etwa Leuchtdioden-Module gehaltert werden.

## Patentansprüche

1. Profilschiene (12, 14, 16), insbesondere zur Halterung gerahmter Solarmodule, mit
- einem Schienenkörper (18)
- zwei Auflageschenkeln (20, 22), von denen mindestens einer in einer senkrecht zu einer Längsrichtung (1) der Profilschiene stehenden Querrichtung (q) vom Schienenkörper (18) absteht und die zueinander parallele Auflageflächen (24, 26) auf unterschiedlicher Höhe (h1, h2) bezüglich einer Unterkante (28) der Profilschiene (12, 14, 16) mit einem Höhenabstand (d) voneinander in einer senkrecht zur Quer- und Längsrichtung weisenden Höhenrichtung (h) aufweisen, und mit
- einer in die Querrichtung (q) weisenden Anlagefläche (30) zwischen den Auflageschenkeln (20, 22), die den Höhenabstand (d) zwischen den Auflageschenkeln zumindest teilweise überbrückt.

2. Profilschiene (12, 14, 16) nach Anspruch 1, bei der die Auflageschenkel (20, 22) stufenartig aneinander grenzen und die Anlagefläche (30) die Auflageflächen (24, 26) verbindet.

3. Profilschiene (114) nach Anspruch 2, bei der derjenige (122) der beiden Auflageschenkel, dessen Auflagefläche in der Höhenrichtung auf der geringeren Höhe angeordnet ist, an seiner Unterseite ein Verbindungselement (153) zum formschlüssigen Verbinden der Profilschiene mit einem Haltelement (132) aufweist.

4. Profilschiene (12, 14, 16) nach einem der vorstehenden Ansprüche, bei der beide Auflageschenkel (20, 22) in der Querrichtung (q) von der Profilschiene abstehen.

5. Halteelement (32, 34, 36) für einen Rahmen zur Verwendung in Verbindung mit einer Profilschiene nach einem der Ansprüche 1 bis 4, mit
- einer in einer Querschnittsansicht T-förmigen Rahmenaufnahme (38), wobei ein vertikaler Balken (40) der T- -Form eine Anlagefläche für einen im Einbauzustand zu halternden Rahmen (R1) bildet,
- einer mit der Rahmenaufnahme (38) verbundenen, in derselben Querschnittsansicht C-förmigen Schenkelaufnahme (46), die ausgebildet ist, im Einbauzustand einen von der Profilschiene in einer senkrecht zu einer Längsrichtung (I) der Profilschiene stehenden Querrichtung (q) vom Schienenkörper (18) abstehenden Auflageschenkel (22) der Profilschiene (12) zu umgreifen, wobei eine Außenfläche des oberen C-Balkens der Schenkelaufnahme (46) zugleich eine Rahmenauflagefläche der Rahmenaufnahme bildet.

6. Halteelement (34) nach Anspruch 5, bei dem ein vertikaler T-Balken (62) der Rahmenaufnahme auf seinen beiden Seiten eine Anlagefläche (56, 58) für jeweils einen Rahmen (R1, R2) bildet.

7. Halteelement (32, 34, 36) nach Anspruch 5 oder 6, bei dem ein oberer horizontaler C-Balken (44) der C-förmigen Schenkelaufnahme (46) eine Auflagefläche für den im Einbauzustand zu halternden Rahmen bildet, und bei dem der obere horizontale C-Balken der Schenkelaufnahme eine Materialstärke (d) in Höhenrichtung (h) hat, die gleich dem Höhenabstand (h1, h2, d) der Auflageflächen (24, 26) der Profilschiene ist.

8. Solarmodulanordnung (10), mit
- einer Vielzahl parallel zueinander verlaufender und quer zu ihrer Längsrichtung voneinander beabstandeter Profilschienen (12, 14, 16) nach einem der Ansprüche 1 bis 3,
- einer Vielzahl gerahmter Solarmodule (R1, R2) die jeweils auf zwei benachbarten der Profilschienen (12, 14; 14, 16) gelagert sind, wobei
- die Solarmodule jeweils mit einem ersten Rahmenteil ihres Rahmens in der Rahmenaufnahme (38) mindestens eines der Halteelemente (32, 34, 36) nach einem der Ansprüche 4 bis 6 auf einem ersten Auflageschenkel (22) einer ersten (12) der zwei benachbarten Profilschienen (12, 14) gehaltert sind und mit einem anderen Rahmenteil unmittelbar auf einem der ersten Profilschiene (12) zugewandten zweiten Auflageschenkel (20) einer zweiten (14) der zwei benachbarten Profilschienen aufliegen.

9. Solarmodulanordnung nach Anspruch 8, bei dem einander zugewandte Auflageschenkel (20, 22) benachbarter Profilschienen (12, 14) Auflageflächen auf unterschiedlicher Höhe (h1, h2) bezüglich einer jeweiligen Unterkante (28) ihrer jeweiligen Profilschiene (12, 14) haben und die Halteelemente (32, 34) auf dem Auflageschenkel (22) geringerer Höhe (h1) angeordnet sind.

10. Solarmodulanordnung nach Anspruch 9, bei der die Profilschienen so montiert sind, dass ihre Auflageflächen gleicher Höhe (24) bezüglich der jeweiligen Profilschiene in einer gemeinsamen Ebene liegen.

11. Solarmodulanordnung nach Anspruch 10, bei der die Halteelemente (32, 34, 36) auf den Auflageschenkeln (22) geringerer Höhe (h1) jeweils eine Lagerfläche (44) für einen Rahmen (R1) eines Solarmoduls aufweisen, die in der gemeinsamen Ebene der Auflageflächen (24) größerer Höhe (h2) liegt.

12. Solarmodulanordnung nach einem der Ansprüche 10 und 11, bei der die gemeinsame Ebene der Auflageflächen (24, 44) gegenüber einer Horizontebene (H) am Installationsort der Solarmodulanordnung geneigt ist, wobei die Horizontebene (H) senkrecht zu einer zum Erdmittelpunkt weisenden Lotrichtung (L) am Installationsort liegt.

13. Solarmodulanordnung nach einem der Ansprüche 8 bis 12, bei der die Rahmen (R1, R2) der Solarmodule rechteckförmig mit zwei längeren und zwei kürzeren Seiten sind, wobei die zwei längeren Seiten vollständig auf Profilschienen (12, 14, 16) gelagert sind und die zwei kürzeren Seiten sich zwischen zwei benachbarten Profilschienen (12, 14; 14, 16) erstrecken.

14. Solarmodulanordnung nach Anspruch 12 oder Anspruch 12 und 13, bei dem auf einer der Horizontebene am entferntesten liegenden obersten Profilschiene (16) der Solarmodulanordnung die Halteelemente (36) befestigt sind.
